# EUROPÄISCHE PATENTSCHRIFT

(11) **EP 1 800 813 B1**
(45) Veröffentlichungstag und Bekanntmachung des Hinweises auf die Patenterteilung: **04.01.2012**
(21) Anmeldenummer: 06024303.7
(22) Anmeldetag: 23.11.2006
(51) Int. Cl.: B27D 5/00, B27D 1/00, B27G 11/00, B29C 63/00, B32B 21/00

(54) **Verfahren und Vorrichtung zur Beschichtung von Bauteilen**
method and device for coating components
Procédé et dispositif de revêtement de composants

(30) Priorität: 23.11.2005 DE 102005056828
(43) Veröffentlichungstag der Anmeldung: 27.06.2007
(60) Teilanmeldung: 11161293.3
(73) Patentinhaber: Homag Holzbearbeitungssysteme AG, 72296 Schopfloch (DE)
(72) Erfinder: Wust, Hendrik, Dipl.-Ing., 52066 Aachen (DE); Schwarz, Ulrich, Dr.-Ing., 01067 Dresden (DE)
(74) Vertreter: HOFFMANN EITLE

(56) Entgegenhaltungen:
- WO-A-01/36168
- DE-C1- 4 434 917

## Beschreibung

Die Erfindung betrifft ein Verfahren und eine Vorrichtung zur Beschichtung von Bauteilen, gemäß dem Oberbegriff des Anspruchs 1 und des Anspruchs 8.

Ein solches Verfahren und eine solche Vorrichtung sind aus WO 01/36168 A bekannt. Spezielle Einsatzgebiete des Verfahrens sind die Holzverarbeitung, insbesondere die Möbelindustrie, der Leichtbau, insbesondere im Flugzeugbau, der Automobilbau und die Bauwirtschaft.

Bekannte Beschichtungsvorrichtungen zum Aufbringen der eingangs benannten Beschichtungen arbeiten im Durchlaufverfahren, wobei der Klebstoff vor dem Fügen im bereits aktivierten Zustand auf einen der Fügepartner aufgetragen wird. Andere Vorrichtungen für die Profilummantelung (Softforming) arbeiten nach dem Kalt-Aktivierungs-Verfahren. Dazu wird der Klebstoff bzw. Leim vor der Andruckzone über Wärme emittierende Systeme (Heißluftgebläse, Kontaktwalzen, Infrarotstrahler usw.) aktiviert. Nach der Einstellung der Klebrigkeit wird die Beschichtung auf die evtl. vorgewärmte Schmalfläche gepresst. Der Klebstoff wird entweder auf die Schmalfläche kurz vor der Aktivierung appliziert oder andererseits auf dem Beschichtungsmaterial unabhängig vorbeschichtet.

Zur Verwendung kommen verschiedene thermoplastisch bzw. duroplastisch aushärtende Klebstoffsysteme und Blends daraus.

In Figur A ist der prinzipielle Aufbau einer üblichen Beschichtungsanlage nach dem Stand der Technik dargestellt. Dabei werden ein zu beschichtendes Bauteil 1 und ein solide Beschichtung 3 relativ zueinander bewegt. Das Bauteil 1 und die solide Beschichtung 3 schließen dabei unter einem spitzen Winkel α einen Fügespalt 17 ein. Im Bereich des Zusammentreffens von Bauteil 1 und solider Beschichtung 3 befindet sich die Andruckzone 30 mit einem Andruckelement 4. An die Andruckzone 30 schließt sich ggf. eine Nachpresszone 31 an, in welcher das gefügte Beschichtungsmaterial 5 weiter mit Druck beaufschlagt wird, um ein Ablösen zu verhindern. Bei bestimmten Beschichtungen ist der in der Andruckzone 30 aufgebrachte Druck ausreichend, um eine sichere Verklebung zu gewährleisten. Ist dies nicht der Fall, sind in der Nachpresszone 31 geeignete Nachpresselemente, wie Rollen, Gleitschuhe oder ähnliches, vorgesehen.

Während der Beschichtung bewegt sich die Andruckzone 30 entgegen der Vorschubrichtung 6 relativ zu dem Bauteil 1, ohne dass sich die Größe des Winkels α zwischen Bauteil 1 und solider Beschichtung 3 ändert.

Bei derartigen Anlagen sind verschiedene Vorrichtungen zum Auftrag der Klebstoffe im Einsatz. Am weitesten verbreitet sind Apparaturen, die Schmelzkleber, der in einem beheizten Schmelzbehälter bzw. speziellen Patronensystemen bevorratet wird, über ein Walzensystem auf die vorgewärmte zu beschichtende Schmalfläche auftragen. Parallel zu dem Schmelzkleberauftrag erfolgen die Zuführung und das Andrücken bzw. Fixieren des Beschichtungsmaterials.

Bei diesen Verfahren wird die notwendige Wärmeenergie indirekt eingebracht. Die verwendeten Schmelzkleberbehälter bevorraten weit mehr Klebstoff, als unmittelbar für den Prozeß notwendig. Bevor die Anlage gestartet werden kann, muss der Schmelzkleber, auf seine verarbeitungsfähige Temperatur aufgeheizt werden. Dadurch ist ein Wechsel des Klebstoffes mit erheblichem Aufwand verbunden und eine kurzfristige Nutzung der Anlage nicht möglich.

Bei den beschriebenen Verfahren entstehen beim Energieeintarg erhebliche Verluste dadurch, dass die tatsächlich notwendige Wärmeenergie nicht gezielt in den Klebstoff eingebracht wird. So werden die Beschichtung, das Bauteil und die Umgebung unspezifisch mit erwärmt. Dadurch ist die Abbindezeit der Klebstoffsysteme abhängig von der Wärmekapazität bzw. - leitfähigkeit der Bauteile und Beschichtungen sowie von deren Temperatur, der Vorschubgeschwindigkeit, der Kontur von Bauteil und Beschichtung, deren Abmessungen, der Maschinenkonstruktion u.a.

Die DE 44 34 917 C1 offenbart ein Verfahren zum selektiven Auftragen von Klebstoff auf ein Substrat, insbesondere für die automatische Bestückung von Leiterplatten in der Mikroelektronik. Dabei wird der Klebstoff zuerst vollflächig auf das Substrat aufgebracht und anschließend in den ausgewählten Bereichen mit einem Energiestrahl bestrahlt, wodurch sich der Klebstoff mit der Oberfläche des Substrates verbindet. Abschließend wird der überschüssige Klebstoff in den nicht ausgewählten Bereichen entfernt. In einem späteren Arbeitsschritt, welcher nicht Bestandteil des Verfahrens ist, werden auf die ausgewählten, mit Klebstoff versehenen Bereiche, Mikroelektronikbauteile geklebt. Als Energiestrahl ist bei dem Verfahren insbesondere ein Laserstrahl vorgesehen. Dieser trifft in annähernd senkrechtem Winkel auf das Substrat auf. Eine Übertragung dieses Verfahrens auf die Beschichtung von plattenförmigen oder dreidimensional geformten Bauteilen mit einer soliden Beschichtung ist aufgrund der beengten räumlichen Verhältnisse im Fügespalt nicht möglich.

Die DE 199 21 579 A1 offenbart ein Verfahren zur bereichsweisen Übertragung einer Dekorlage einer Transferfolie auf ein Substrat. Dabei wird die Kleberschicht der Dekorlage nur in den Bereichen mittels Strahlungsenergie aktiviert, in denen die Dekorfolie mittels eines Prägewerkzeuges auf das Substrat übertragen werden soll. Vorteilhaft enthält die Transferfolie eine Absorptionsschicht, welche die Energiestrahlung absorbiert und auf die Klebeschicht überträgt. Dadurch wird die Klebeschicht für die nachfolgende Übertragung der Dekorlage voraktiviert. Zur anschließenden, vollständigen Aktivierung dient das beheizte Prägewerkzeug. Somit wird die zur vollständigen Aktivierung notwendige Energie durch direkten Kontakt mit mindestens einem der Fügepartner aufgebracht. Damit ist das Verfahren für die Beschichtung von dreidimensional geformten Bauteilen mit einer soliden Beschichtung mit begrenzter elastischer Verformbarkeit nicht anwendbar, da die Herstellung eines beheizten Prägewerkzeuges für jedes herzustellende dreidimensional geformte Bauteil nicht praktikabel ist.

In der EP 1 163 864 B1 wird ein Verfahren vorgestellt, bei dem eine Kunststoffkante aus Kunststoffschichten unterschiedlicher Härte klebstofffrei auf eine Möbelplatte aufgeschweißt wird, wobei die Kunststoffschicht auf der Fügeseite der Kunststoffbeschichtung dabei mittels Energiestrahlung angeschmolzen wird. Vorteilhaft an diesem Verfahren ist dass keine sichtbare Leimfuge verbleibt. Allerdings ist das Verfahren ausschließlich auf Beschichtungen mit Kunststoffmaterialien anwendbar, eine Verarbeitung von z. B. Massivholz- bzw. Furnierbeschichtungen oder dergleichen ist nicht möglich

Ferner offenbart die WO 01/36168 A eine Durchlaufmaschine, bei welcher ein separat zugeführtes Haftmittel unter Einsatz unterschiedlichster Energiequellen aktiviert wird.

Aufgabe der Erfindung ist es, ein Verfahren und in- dafür geeignete Vorrichtung, anzugeben, mit dem die Aktivierung/Reaktivierung des Klebstoffs zeitlich unmittelbar vor dem, Zusammenfügen von Bauteil und solider Beschichtung erfolgt, wobei mit der Energiezufuhr keine negativen Auswirkungen, insbesondere physikalische und / oder chemische Umsetzungen, auf das Bauteil, die solide Beschichtung oder den Klebstoffverbunden sind.

Erfindungsgemäß wird die Aufgabe durch ein Verfahren mit den im Anspruch 1 genannten Merkmalen gelöst. Die erfindungsgemäße Vorrichtung weist Merkmale entsprechend Anspruch 8 auf. Vorteilhafte Varianten des Verfahrens und der Vorrichtung sind Gegenstand von Unteransprüchen.

Bei dem erfindungsgemäßen Verfahren zur Beschichtung von Bauteilen aus Holz, Holzwerkstoffen, Kunststoffen wird eine solide Beschichtung, insbesondere aus einem Echtholzfurnier, auf eine Fläche des Bauteils aufgebracht Die zu beschichtende Fläche des Bauteils kann dabei eine Breit- oder Schmalfläche, z.B. die Arbeitsfläche oder Stirnfläche einer Küchenarbeitsplatte.

Das Bauteil und die solide Beschichtung werden relativ zueinander bewegt und mittels Klebstoff im Bereich einer Andruckzone miteinander verbunden. Der Klebstoff wird im Bereich einer Wirkzone durch Bestrahlung mit mindestens einem Laser aktiviert oder reaktiviert und anschließend durch ein Andruckelement die solide Beschichtung mit dem Bauteil verbunden. Die Wirkzone kennzeichnet den Auftreffbereich des Laserstrahls und liegt vor und/oder im Bereich der Andruckzone. Der Bereich, in dem der Laserstrahl auf die Oberfläche des Klebstoffes und/oder des Bauteils und/oder der soliden Beschichtung auftrifft, wird als Wirkfleck bezeichnet. Der Wirkfleck kann durch Strahloszillation bzw. Strahlformung durch eine geeignete Optik der Geometrie der zu aktivierenden Klebstoffoberfläche angepasst werden. Dabei werden ein Linsensystem und/oder ein oder mehrere Ablenkspiegel eingesetzt. Das Linsensystem ermöglicht dabei die Aufweitung des Laserstrahles. Eine Schwingung mindestens eines Ablenkspiegels, welcher um mindestens eine Achse drehbar gelagert ist, resultiert in einer Oszillation des Laserstrahles. Eine mit der Oszillation gleichzeitige Steuerung der Laserleistung ermöglicht die genaue Verteilung des Energieeintrages auf der zu aktivierenden Klebstoffoberfläche. Die tatsächliche vom Klebstoff und/oder der soliden Beschichtung und/oder dem Bauteil aufgenommene Energie des Laserstrahls wird mittels einer Sensorik erfasst. Gleichzeitig erfolgt eine Rückkoppelung auf mindestens einen der Prozessparameter. Als Prozessparameter werden in dieser Anmeldung Vorschubgeschwindigkeit, Laserleistung, Strahlgeometrie und Andruckkraft verstanden.

Durch die Einwirkung von Laserstrahlung, die je nach eingesetztem Klebstoff verschiedene Wellenlängen und Intensitäten aufweisen kann, wird der Klebstoff, der die Verbindung zwischen der soliden Beschichtung und der Schmalfläche herstellt, aktiviert bzw. reaktiviert Das Verfahren und/oder die Vorrichtung eignet sich sowohl für das Aufbringen ebener, wie auch profilierter solider Beschichtungen an plattenförmigen oder dreidimensionalen Bauteilen.

Das Verfahren lässt sich in mehreren Varianten durchführen, die sich in der Zuführung des Klebstoffsystems unterscheiden:
a) Auftrag des Klebstoffes unmittelbar vor der Beschichtung über ein Flüssig-Klebstoff-Auftragssystem auf solide Beschichtung bzw. Bauteil,
b) Auftrag durch Zuführung eines Klebstoffbandes in den Fügespalt,
c) Verwendung von mit Klebstoff ausgestatteten, solide Beschichtungen bzw. Bauteile.

Vor allem solide Beschichtungen aus Massivholz größerer Dicke ist nur sehr begrenzt elastisch verformbar. Aus diesem Grund kann dieses Material im Bereich der Andruckzone nur eine begrenzte elastische Biegung erfahren, was einen sehr kleinen Öffnungswinkel des Fügespaltes bedingt. Ein wesentlicher Vorteil des Verfahrens besteht darin, dass auch bei sehr kleinen, engen Fügespalten eine exakte Aktivierung des Klebstoffes unmittelbar vor der Andruckzone ermöglicht wird.

Ein weiterer Vorteil des Verfahrens besteht darin, dass nur soviel Energie durch den Laserstrahl in die Fügepartner/ in den Fügespalt eingebracht wird, wie tatsächlich zur Aktivierung des Klebstoffs benötigt wird. Dadurch werden zugleich negativen Auswirkungen (insbesondere physikalische und / oder chemische Umsetzungen) auf das Bauteil, die solide Beschichtung oder den Klebstoff vermieden und der Energieverlust minimiert. Weiterhin ermöglicht das Verfahren eine verbesserte Produktivität durch eine wesentliche Erhöhung der Vorschubgeschwindigkeit der Anlage.

Ein Laser erzeugt einen Laserstrahl, der mittels eines Linsensystems bzw. Strahlformung durch eine geeignete Optik auf die gewünschte Größe und Geometrie aufgeweitet und ggf. mittels mindestens eines drehbar gelagerten Ablenkspiegels auf die Größe der Oberfläche des Klebstoffs und/oder des Bauteils und/oder der soliden Beschichtung im Bereich der Wirkzone in den Fügespalt gelenkt wird. Anschließend werden durch ein Andruckelement beide Fügepartner dauerhaft verbunden. Dem Andruckelement können bedarfsweise in der Nachpresszone geeignete Nachpresselemente zum weiteren Anpressen nachgeordnet sein.

Während der Aktivierung mittels Laserstrahlung wird durch einen geeigneten Sensor, insbesondere ein Pyrometer oder ein Infarotmesssystem, die tatsächlich vom Klebstoff aufgenommene Energie des Laserstrahls erfasst. Dies erscheint besonders vorteilhaft bei inhomogenen soliden Beschichtungsmaterialien, wie Massivholz u.ä., welche keine konstanten Materialparameter, wie Wärmekapazität bzw. -leitung aufweisen. Die Rückkoppelung zwischen dem tatsächlichen Energieeintrag im Fügespalt auf mindestens einen der Prozessparameter (Vorschubgeschwindigkeit, Andruckkraft, Laserleistung und Strahlgeometrie) ermöglicht eine gleich bleibende Qualität der Klebeverbindung. Der Einsatz eines Sensors erscheint besonders zweckmäßig bei einer indirekten Aktivierung. Diese erscheint sinnvoll bei bestimmten Beschichtungsaufgaben, insbesondere bei empfindlichen Klebstoffen, bzw. bei Klebstoffen in die keine oder nur geringfügig Energie eingekoppelt werden kann. Bei der indirekten Aktivierung wird in die solide Beschichtung und/ oder das Bauteil mittels des Laserstrahls Energie eingebracht und dadurch erwärmt. Diese Wärmeenergie aktiviert bzw. reaktiviert beim Fügen den Klebstoff in der Andruckzone. Beim direkten Erwärmen von Bauteil und/oder solider Beschichtung besteht ein erhöhtes Risiko von pyrolytischen Erscheinungen. Zu deren weitgehenden Reduzierung müsste z. B. die Laserleistung gesenkt werden, um eine geringere Erwärmung von Bauteil und/oder solider Beschichtung zu gewährleisten. Weitere Möglichkeiten sind die Erhöhung der Vorschubgeschwindigkeit oder eine stärkere Aufweitung des Laserstrahls. Mittels des Sensors kann die Beschichtungsanlage mit der maximal möglichen Vorschubgeschwindigkeit bei gleichzeitiger Vermeidung pyrolytischer Erscheinungen unter Einhaltung der notwendigen Verfahrensparameter für den Klebstoff betrieben werden.

Ein weiterer Vorteil der Vorrichtung ist eine deutliche Reduktion des Energieverlustes, da die Energie direkt und gezielt in der Wirkzone zugeführt wird und die Wärmemenge bzw. -eintrag steuer- bzw. regelbar ist. Daneben wird die Brandgefahr, die bei herkömmlichen Verfahren durch den Einsatz hocherhitzter Schmelzklebstoffbehälter ausgelöst wird, signifikant reduziert bzw. beseitigt.

Weiterhin vorteilhaft ist, dass durch den Wegfall der Aufheizzeiten für die Schmelzklebstoffbehälter die Beschichtungsanlagen flexibler nutzbar sind.

Ein weiterer Vorteil besteht darin, dass eine Anordnung, bestehend aus einem Laser, einer Datenverarbeitungseinrichtung und einer Sensorik zur Erfassung der aufgenommenen Energie des Laserstrahls, jederzeit an einer bestehenden Beschichtungsanlage nachgerüstet werden kann.

Gleichzeitig wird die Produktivität der Beschichtungsanlagen wesentlich gesteigert, da durch direkte und gezielte Erwärmung mittels des Lasers bedeutend höhere Vorschubgeschwindigkeiten erreichbar sind. Altanlagen sind mit dem Verfahren und /oder der Vorrichtung nachrüstbar.

Vorteilhaft eigenen sich Verfahren und Vorrichtung für ebene, wie, auch profilierte solide Beschichtungen.

Die Erfindung wird nachfolgend an Hand von Ausführungsbeispielen näher erläutert. In den weiteren Zeichnungen zeigen:
- Fig. 2: eine Beschichtungsanlage mit raumfest angeordnetem Bauteil,
- Fig. 3: eine Beschichtungsanlage mit beweglich angeordnetem Bauteil und Beschichtungsaggregat,
- Fig. 4: eine Vorrichtung mit Klebstoffauftrag über ein Flüssig-Klebstoff-Auftragssystem,
- Fig. 5: eine Vorrichtung mit Klebstoffzuführung durch Klebstoffband,
- Fig. 6: eine Vorrichtung mit Klebstoffzuführung durch Klebstoffband mit indirekter Aktivierung,
- Fig. 7: eine Vorrichtung mit bereits mit Klebstoff dotierter solider Beschichtung,
- Fig. 8: eine Fügeseite einer soliden Schmalflächenbeschichtung mit bandförmigem umlaufend aktiviertem/reaktiviertem Klebstoff.
- Fig. 9: einen Andruckschuh als Andruckelement,
- Fig. 10: ein Rollen-Band-System als Andruck- bzw. Nachpresselement,
- Fig. 11: ein Rollensystem als Andruck- bzw. Nachpresselement,
- Fig. 12: eine Lamelle als Andruckelement,
- Fig. 13: eine Vorrichtung mit Sensorik zur Erfassung der Temperatur,
- Fig. 14: eine Vorrichtung mit koaxialer Sensorik zur Erfassung der Temperatur,
- Fig. 15: eine Dotierung aus Klebstoff in der Schmalflächenbeschichtung und
- Fig. 16: eine Schnittdarstellung einer Leichtbauplatte.

Es bestehen verschiedene Möglichkeiten der Realisierung des Beschichtungsverfahrens.

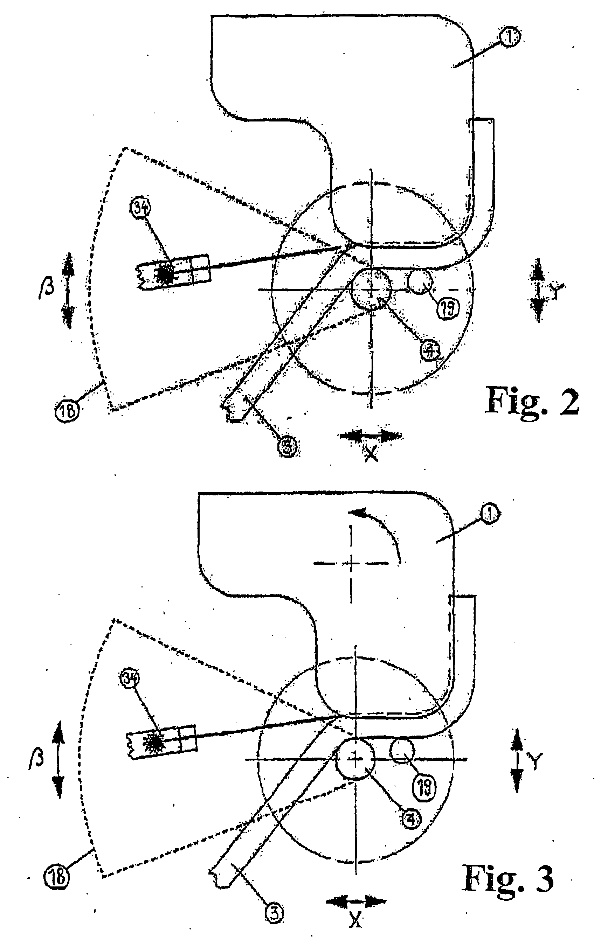

Figur 2 zeigt eine Anordnung, bei der ein Beschichtungsaggregat 18 um ein raumfest angeordnetes Bauteil 1 bewegt wird. Auf dem in x- und y-Richtung beweglichen und um den Winkel β schwenkbaren Beschichtungsaggregat 18 sind ein Laserquelle 34 und/oder die notwendigen optischen Vorrichtungen, das Andruckelement 4, gegebenenfalls Nachpresselement(e) 19 und eine in der Figur nicht gezeigte Zuführeinrichtung für die solide Beschichtung 3 angeordnet.

In der in Figur 3 gezeigten Variante sind sowohl das Bauteil 1 als auch das Beschichtungsaggregat 18 beweglich angeordnet. Durch die Überlagerung beider Bewegungen kann die Geschwindigkeit und damit die Effizienz der Beschichtungsanlage weiter erhöht werden.

### Ausführungsbespiel 1

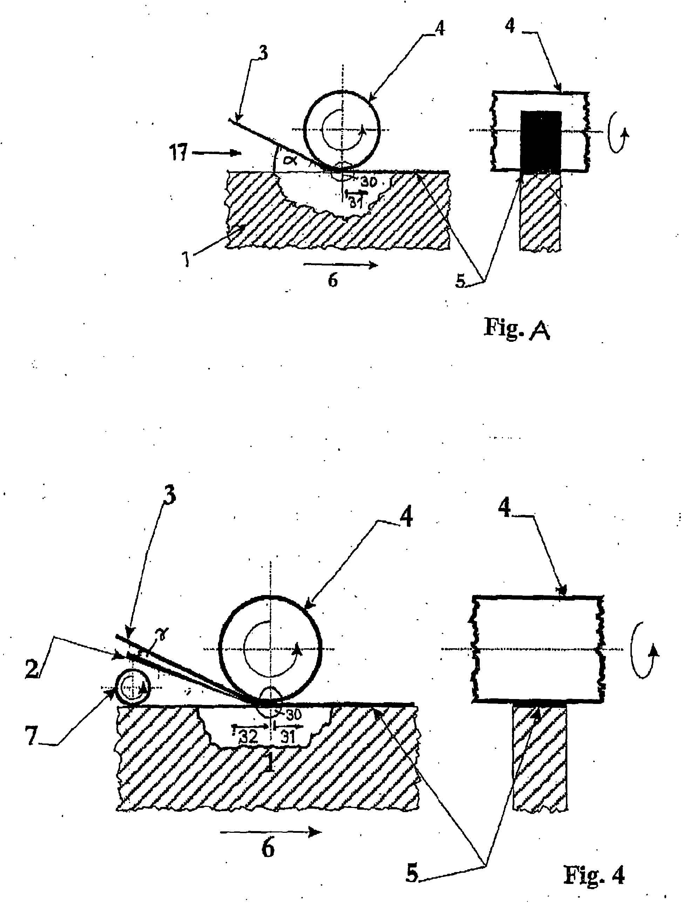

In Figur 4 ist die Vorrichtung zur Schmalflächenbeschichtung mit Auftrag des Klebstoffs über ein Flüssig-Klebstoff-Auftragssystem dargestellt. Der Klebstoff wird auf das Bauteil 1 über ein Walzensystem 7 aufgetragen. Anschließend erfolgt die Zuführung der soliden Schmalflächenbeschichtung 3 an die mit Klebstoff vorbeschichtete Schmalfläche des Bauteils 1. Das Andruckelement 4 ist als Andruckrolle ausgebildet. In der Wirkzone 32 wird durch Einwirkung des Laserstrahls 2 der Klebstoff aktiviert. Der Laserstrahl 2 trifft dabei unter einem Winkel γ auf die Oberfläche des Klebstoffs auf. Der Wirkfleck des Laserstrahls 2 wird durch ein Linsensystem auf die Breite der zu aktivierenden Klebstofffläche aufgeweitet.

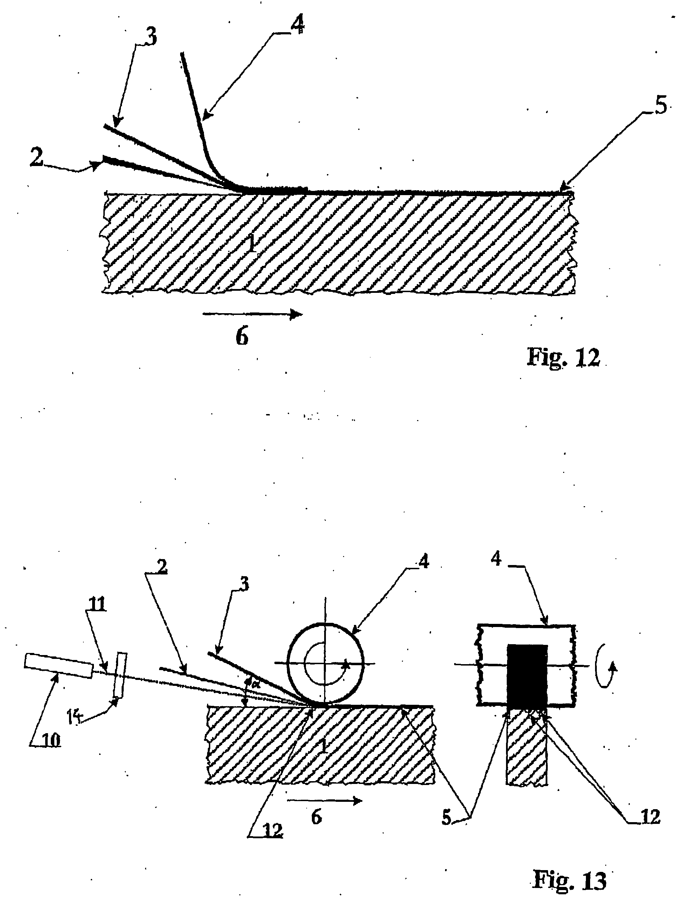

Figur 13 zeigt die verwendete Sensorik zur Messung der Temperatur im Wirkfleck des Laserstrahls 2. Ein Infarotsensor 10 misst über einen Messstrahl 11 die Temperatur im Wirkfleck des Laserstrahls 2 an mehreren, im Wirkfleck verteilten Messstellen 12. Im Messstrahl 11 befindet sich ein Filtersystem 14, welches den Wellenlängenbereich des Strahlungsspektrums auf den auszuwertenden Bereich einschränkt. Zur Stabilisierung der soliden Beschichtung 3 auf dem Bauteil 1 können der Andruckrolle 4 hier nicht gezeigte Nachpresselememe zum Aufbringen von Druck auf die Beschichtung 3 nachgeordnet sein. Die gemessenen Daten werden mittels einer hier nicht gezeigten Datenverarbeitungseinheit ausgewertet. Anhand der ausgewerteten Daten wird die Vorschubgeschwindigkeit geregelt.

### Ausführungsbeispiel 2

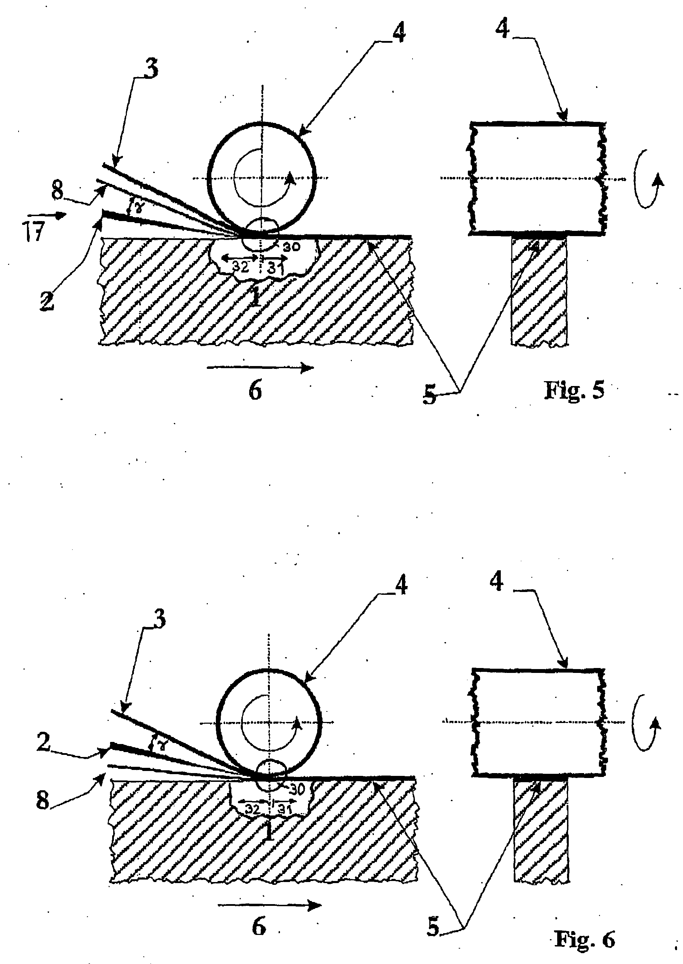

In der Figur 5 ist eine Vorrichtung zur Beschichtung einer Schmalfläche mit Klebstoffauftrag über ein Klebstoffband dargestellt. Die Zuführung der soliden Beschichtung 3 erfolgt über eine nicht gezeigte Zufuhreinrichtung. Das Andruckelement 4 ist als Andruckrolle ausgebildet. In der Wirkzone 32, nahe der Andruckrolle 4, wird der Klebstoff durch Einwirkung des Laserstrahls 2 aktiviert. Durch eine in der Figur nicht gezeigte, oben beschriebene Sensorik (entsprechend Figur 13) wird die Temperatur im Wirkfleck des Laserstrahls 2 gemessen. Die aufgenommenen Messdaten werden durch eine ebenfalls nicht gezeigte Datenverarbeitungseinrichtung ausgewertet, und anhand dieser ausgewerteten Daten die Laserstrahlleistung geregelt. Zur Stabilisierung der soliden Beschichtung 3 auf dem Bauteil 1 sind der Andruckrolle 4 hier nicht gezeigte Nachpresselemente zum Aufbringen von Druck auf die solide Beschichtung 3 nachgeordnet. Dabei wurde eine solide Beschichtung 3 aus PVC mit einer Dicke von 2 mm und ein Klebstofffilm 8 aus Ethylenvinylacetat (EVA) von ca. 180 g/m² auf eine 19 mm breite Schmalfläche einer mitteldichten Faserplatte (MDF) verklebt. Der Laserstrahl 2 wird zu einer Linie, die der Breite der Schmalfläche entspricht, mittels eines nicht dargestellten Linsensystems aufgeweitet. Bei einer Vorschubgeschwindigkeit von 20 m/min werden im Mittel 1750 W nominelle Laserleistung für die Reaktivierung und Verklebung benötigt. Das beschichtete Bauteil kann sofort weiter verarbeitet werden.

### Ausführungsbeispiel 3

Figur 6 zeigt eine Vorrichtung, bei der der Klebstoff ebenfalls mittels Klebstoffband 8 zugeführt wird. In diesem Beispiel findet ein Polyolephin-Klebstoff Verwendung, in den nur wenig Energie mittels des Laserstrahls 2 eingekoppelt werden kann. Aus diesem Grund trifft der mittels Linsensystem aufgeweitete Laserstrahl 2 in der Wirkzone 32 nicht auf die Oberfläche des Klebstoffs 8, sondern auf die Oberfläche der soliden Beschichtung 3 auf (indirekte Aktivierung). Die von der soliden Beschichtung aufgenommene Wärme geht beim anschließenden Fügen in der Andruckzone 30 in den Klebstoff über und aktiviert/reaktiviert diesen.

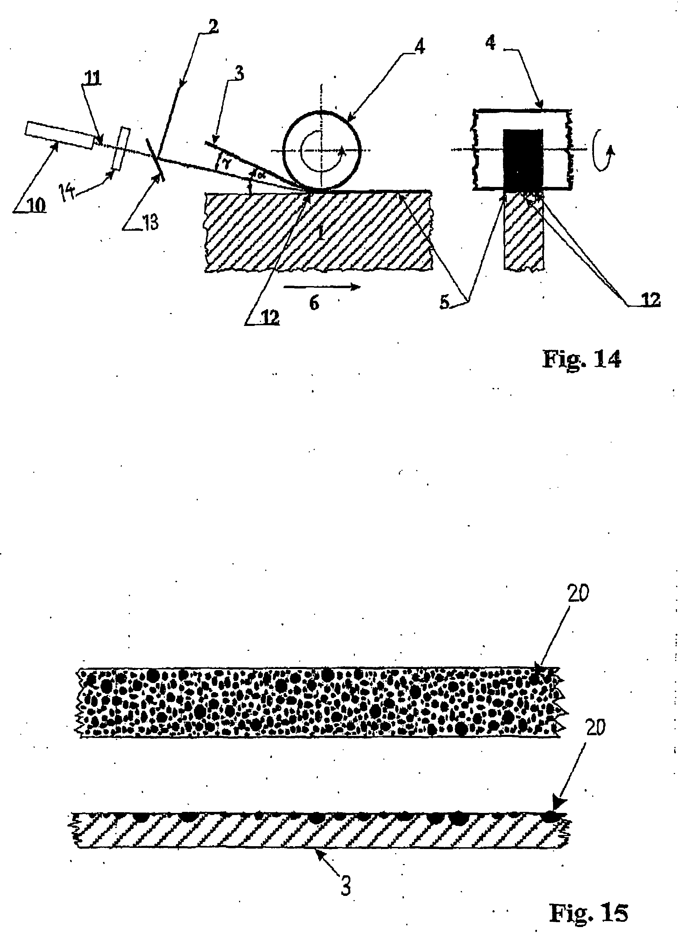

Das Risiko pyrolytischer Erscheinungen ist bei der indirekten Aktivierung besonders hoch, weshalb eine koaxiale Sensorik entsprechend Figur 14 Verwendung findet. Durch das Pyrometer 10 wird die Temperatur an mehreren Messstellen 12 der Wirkzone 32 gemessen. Im Messstrahl 11 befindet sich ein Filtersystem 14, das den Wellenbereich des Strahlenspektrums auf den auszuwertenden Bereich einschränkt. Durch Reflexion am Halbspiegel 13 wird der Laserstrahl 2 in den Fügespalt 17 gelenkt. Dabei ist der Halbspiegel 13 für die zu messende Infarotstrahlung durchlässig, wodurch Laserstrahl 2 und Messstrahl 11 getrennt werden. Somit haben Laserstrahl 2 und Messstrahl 11 vom Halbspiegel 13 bis zur Wirkzone 32 einen identischen Strahlengang. Damit ermöglicht das koaxiale Messverfahren die Temperaturmessung genau im Wirkfleck des Laserstrahles 2. Es werden mehrere im Wirkfleck verteilte Messstellen 12 gemessen und mittels einer hier nicht gezeigten Datenverarbeitungseinheit ausgewertet. Anhand der ausgewerteten Daten wird die Laserstrahlleistung geregelt.

### Ausführungsbeispiel 4

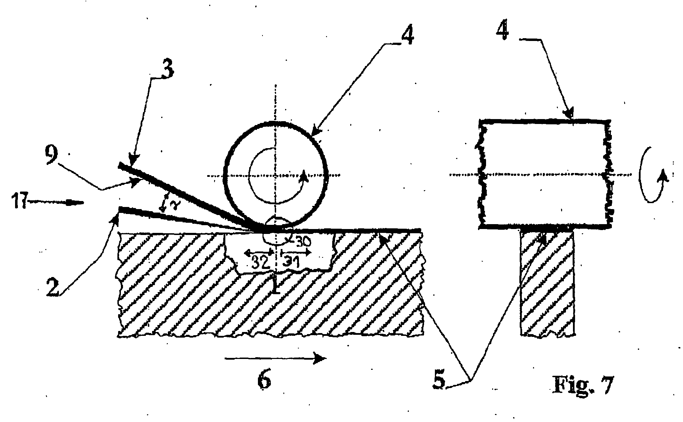

In der Fig. 7 ist eine Vorrichtung zur Verarbeitung vorbeschichteter solider Beschichtungen dargestellt. Der Klebstoffauftrag erfolgt hier über die Vorbeschichtung 9 der soliden Beschichtung 3. Während der Zuführung der soliden Beschichtung 3 erfolgt die Aktivierung des Klebstoffes in der Wirkzone 32 der zugeführten soliden Beschichtung 3. Das Andruckelement 4 ist als Andruckrolle ausgebildet. Der auf der soliden Beschichtung 3 aufgebrachte Klebstoff wird in der Wirkzone 32 durch Einwirkung des Laserstrahls 2 aktiviert. Zur Messung der Temperatur im Wirkfleck des Laserstrahls 2 wird eine oben beschriebene Sensorik entsprechend Figur 13 verwendet. Anhand der von einer (in der Figur nicht gezeigten) Datenverarbeitungseinheit ausgewerteten Daten wird die Laserstrahlleistung geregelt. Es wurde eine mit Schmelzklebstoff vorbeschichtete Beschichtung 3 aus Spezialpapier mit einer Dicke von 0,5 mm auf einer 19 mm breiten Schmalfläche einer Spanplatte 1 verklebt. Die Aktivierung des Klebstoffs erfolgte mit Laserstrahlung, wobei der Laserstrahl 2 zu einer Linie die der Breite der Schmalfläche entspricht geformt wurde. Bei einer Vorschubgeschwindigkeit von 20 m/min werden im Mittel ca. 1250 W nominelle Laserleistung für die Reaktivierung und Verklebung benötigt. Die Schmalfläche kann sofort weiter verarbeitet werden.

### Ausführungsbeispiel 5

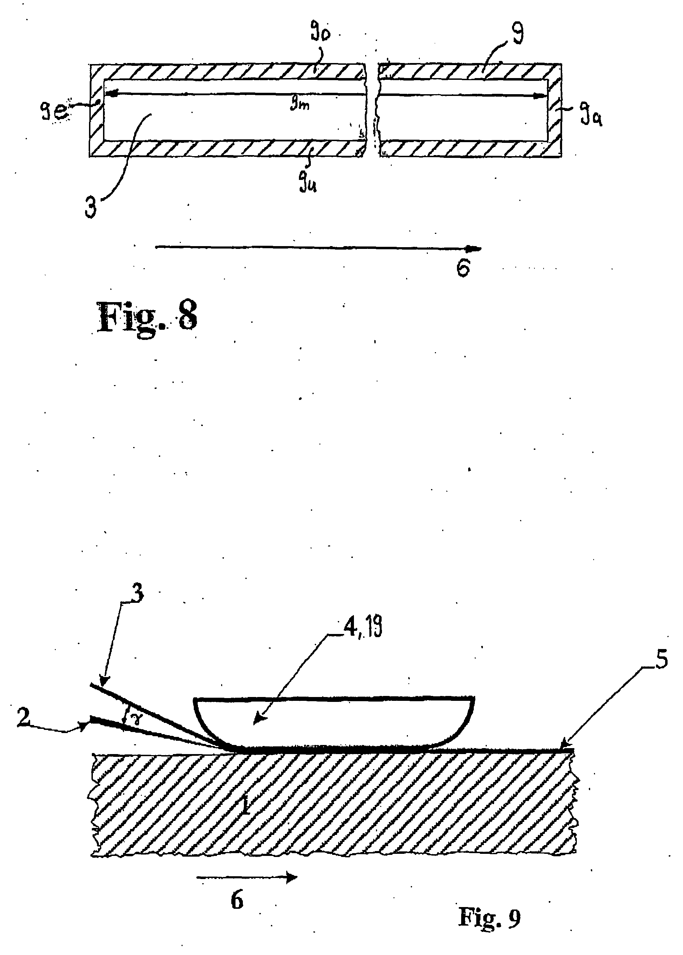

Figur 8 zeigt eine solide Beschichtung 3 für eine Küchenarbeitsplatte. Da der verwendete Klebstoff sehr kostenintensiv ist, erfolgte die Dotierung 9 nur im Randbereich 9a, 9e, 9o, 9u der soliden Beschichtung 3. Die Aktivierung der Dotierung 9 während des Beschichtungsvorgangs erfolgt durch zwei Laserstrahlen, welche im Anfangs- 9a bzw. Endbereich 9b durch Strahloszillation und Aufweitung der Laserstrahlen, den Klebstoffauftrag über der gesamten Höhe der soliden Beschichtung 3 aktivieren. Im mittleren Bereich 9m erfolgt die Laserbeaufschlagung nur in den oberen und unteren Randbereichen 9u, 9o. Dies ist energiesparend und ermöglicht einen Durchlauf mit hohen Vorschubgeschwindigkeiten. Zudem haben Versuche gezeigt, dass eine nur in den Randbereichen 9a, 9e, 9u, 9o geklebte Verbindung mechanischen Beanspruchungen besser standhält und ein besseres Haftungsverhalten gegenüber vollflächig verklebten soliden Beschichtungen aufweist.

Alternativ ist auch die Bestrahlung mit nur einem Laser möglich. Dabei wird die Laserstrahlleistung periodisch auf einen Bruchteil der Einsatzleistung reduziert und gleichzeitig eine Blende in den Strahlengang gefahren. Der Laser wird nicht ausgeschaltet, da ein periodisches Ausschalten des Lasers dessen Standzeit stark verkürzt. Im Zusammenspiel mit einem drehbar gelagerten Ablenkspiegel wird somit nur der Randbereich 9o, 9u bestrahlt. Im Anfangs- 9a bzw. Endbereich 9e erfolgt die Bestrahlung über die gesamte Höhe der soliden Beschichtung 3. In diesem Bereich muss entweder bei gleich bleibender Vorschubgeschwindigkeit die Laserleistung erhöht, oder bei gleich bleibender Laserleistung die Vorschubgeschwindigkeit verringert werden.

Die so gefügte solide Beschichtung ist vollständig flüssigkeitsdicht, da der gesamte Randbereich der soliden Beschichtung verklebt wurde.

Bei der Beschichtung findet eine oben beschriebene Sensorik entsprechend Figur 13 Verwendung, wobei die Temperaturen von 2 Messstellen im oberen sowie im unteren Bereich (9o, 9u) der Beschichtung gemessen werden. Wie bei den vorstehenden Ausführungsbeispielen beschrieben, wird anhand der gemessenen Temperaturen die Laserstrahlleistung geregelt.

Die Figuren 9, 10, 11 und 12 zeigen verschiedene Möglichkeiten der Gestaltung der Andruckelemente 4 bzw. der Nachpresselemente 19. Im einzelnen zeigt die Figur 9 einen Andruckschuh 4,19, welcher auf der soliden Beschichtung 3 gleitet. Ein Andruckschuh 4,19 findet zum Beispiel Verwendung beim Aufbringen einer profilierten soliden Beschichtung 3, welche in ein ebenfalls profiliertes Bauteil 3 gedrückt wird.

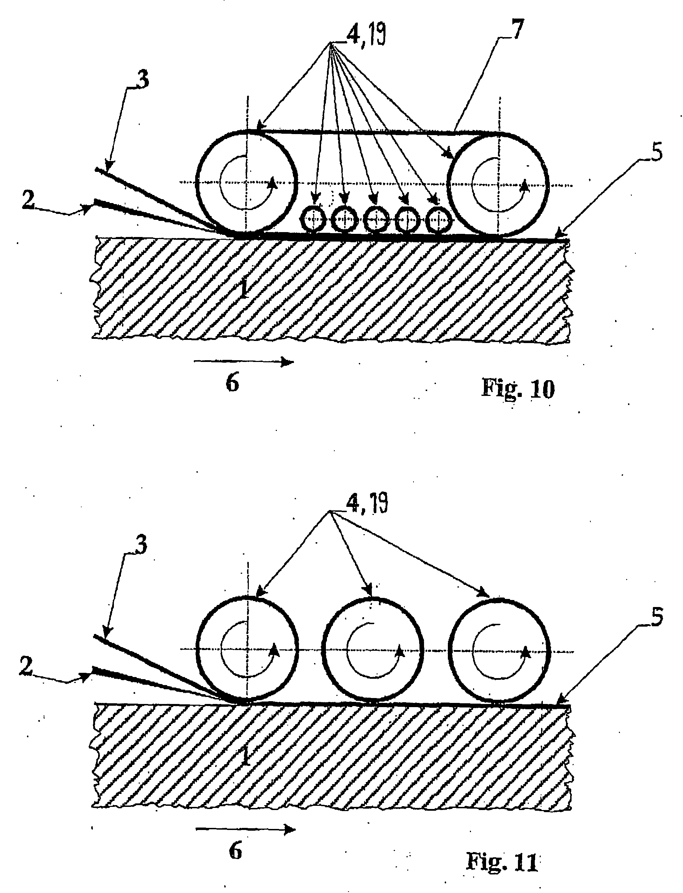

Die Figur 10 zeigt ein Rollen-Band-System 4,19, mit dem ein gleich bleibender Anpressdruck über einen längeren Zeitraum erzeugt wird.

In Figur 11 ist ein System 4,19 bestehend aus 3 Andruck- bzw. Nachpressrollen, dargestellt.

Figur 13 zeigt eine Lamelle als Andruckelement 4.

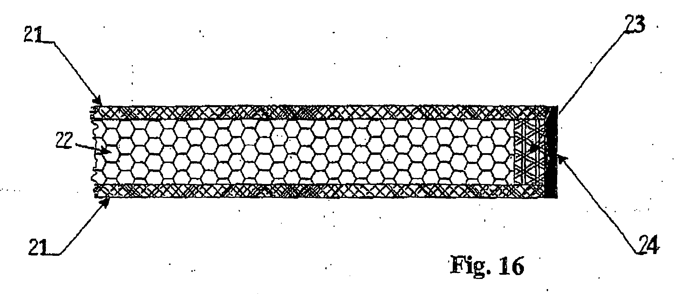

Flächige Systeme, bei denen der Anpressdruck über einen längeren Zeitraum auf einer größeren Fläche wirkt, wie insbesondere das Rollen-Band-System, eignen sich besonders für die Beschichtung wenig druckfester Bauteile 1 bzw. Beschichtungen 3, z. B. weicher Faserplatten oder Leichtbauplatten für den Flugzeugbau (siehe Figur 16). Durch den, im Vergleich zu einer einzigen Andruckrolle 4 geringeren Anpressdruck, wird eine Beschädigung des Bauteils 1 bzw. der soliden Beschichtung 3 vermieden. Zudem wird die solide Beschichtung 3 nach dem ersten Andrücken stabilisiert. Im Allgemeinen sind die Andruck- bzw. Nachpresselemente 4,19 senkrecht zur Beschichtungsebene federnd gelagert, um Toleranzen auszugleichen und einen konstanten Pressdruck zu gewährleisten. Darüber hinaus ist für bestimmte Anwendungsfälle die Verwendung von profilierten, beispielhaft konvex oder konkav geformten, Andruck- 4 bzw. Nachpresselementen 19 zweckmäßig.

Figur 15 zeigt eine Schmalflächendotierung 3 aus Klebstoff in der soliden Schmalflächenbeschichtung. In der porösen Oberfläche der Fügeseite der soliden Beschichtung 3 befinden sich Klebstofflinsen 20. Dies ermöglicht einen klebstoffsparenden, stochastisch verteilten Klebstoffauftrag. Dieser ist auch auf Bauteile mit poröser Oberfläche anwendbar. Eine solche Verklebung mittels Klebstofflinsen 20 bietet eine erhöhte Festigkeit, da die Verklebung durch den in die solide Beschichtung 3 oder das Bauteil eindringenden Klebstoff in der dritten Dimension verankert ist. Ein weiterer Vorteil besteht in einer weiteren Minimierung von Klebstoffresten, da in den Randbereichen, wo beim Andrücken ggf. Klebstoffreste austreten, eine nur sehr geringe Menge Klebstoff dotiert ist.

Figur 16 zeigt den Schnitt einer Leichtbauplatte für den Einsatz beim Flugzeugbau. Diese hat einen Kern 22 aus einer Wabenstruktur phenolbeharzter Papiere. Dies ist ein druckfestes Material mit einem hohen Hohlraumanteil. Außen auf den Breitflächen befinden sich Deckschichten 21. Die Deckschichten bestehen aus Aramidfasern. Im Randbereich hat die Leichtbauplatte eine Verstärkung 23 aus einem Schaum. Daran schließt sich außen eine solide Schmalflächenbeschichtung 24 an. Den Anforderungen der Flugzeugindustrie entsprechend müssen die Leichtbauplatten wasserdicht sein, da sich im Inneren ansammelndes Kondenswasser, mit dem die Bauteile aufgrund der hohen Temperaturunterschiede beim Flugbetrieb permanent in Berührung kommen, deren Gewicht vervielfachen würde. Die Schmalfläche wird mit einem Klebstoffauftrag entsprechend Figur 8 beschichtet. Der Beschichtungsvorgang ist wie in Ausführungsbeispiel 1 beschrieben.

Für die Beschichtung der Breitflächen wird eine Klebstofffolie eingesetzt.

### Bezeichnungsliste

- 1: Bauteil
- 2: Laserstrahl
- 3: solide Beschichtung
- 4: Andruckelement
- 5: gefügte solide Beschichtung
- 6: Vorschubrichtung
- 7: Klebstoffauftragsvorrichtung zum Klebstoffauftrag auf der Schmalfläche
- 8: Klebstoffband
- 9: Schmalflächenbeschichtung mit Klebstoffdotierung
- 10: Pyrometer/ Infarotmesssytem
- 11: Messstrahl
- 12: Messstelle
- 13: Halbspiegel
- 14: Filtersystem
- 17: Fügespalt
- 18: Beschichtungsaggregat
- 19: Nachpresselement(e)
- 20: Klebstofflinse
- 21: Deckschicht
- 22: Kernmaterial
- 23: Verstärkungsmaterial im Bereich der Schmalfläche
- 24: Sclunalfachenbeschichtung
- 30: Andruckzone
- 31: Nachpresszone
- 32: Wirkzone
- 34: Laserquelle
- α: Winkel zwischen Bauteil 1 und solider Beschichtung 3
- β: Schwenkwinkel des Beschichtungsaggregates
- γ: Auftreffwinkel des Laserstrahls 2

## Patentansprüche

1. Verfahren zur Beschichtung von Bauteilen (1) aus Holz, Holzwerkstoffen, Kunststoff o. dgl., bei dem eine solide Beschichtung (3), insbesondere aus einem Echtholzfurnier, auf eine Fläche des Bauteils (1) aufgebracht wird, wobei Bauteil (1) und solide Beschichtung (3) relativ zueinander bewegt und mittels Klebstoff im Bereich einer Andruckzone (30) miteinander verbunden werden,
wobei
der Klebstoff im Bereich einer Wirkzone (32) durch Bestrahlung mit mindestens einem Laserstrahl (2) aktiviert oder reaktiviert, und anschließend durch ein Andruckelement (4) die solide Beschichtung (3) mit dem Bauteil (1) verbunden wird **dadurch gekennzeichnet daß** optische Vorrichtungen, das Andruckelement (4) und eine Zufuhrvorrichtung für die solide Beschichtung (3) auf einem in einer ersten (X) und einer zweiten (Y) Richtung beweglichen und um einen Winkel schwenkbaren Beschichtungsaggregat (18) angeordnet sind.

2. Verfahren nach Anspruch 1,
**dadurch gekennzeichnet, dass**
die tatsächlich vom Klebstoff aufgenommene Energie des Laserstrahls (2) erfasst wird und eine Rückkoppelung auf mindestens einen der Prozessparameter (Vorschubgeschwindigkeit, Laserleistung, Geometrie des Laserstrahls, Andruckkraft) erfolgt.

3. Verfahren nach Anspruch 1 oder 2,
**dadurch gekennzeichnet, dass**
der Laserstrahl (2) im Fügespalt (17) auf die Oberfläche des zu aktivierenden/reaktivierenden Klebstoffs unter einem Einfallswinkel (γ) von 0°<γ<90° auftrifft.

4. Verfahren nach einem der vorhergehenden Ansprüche,
**dadurch gekennzeichnet, dass**
der Laserstrahl (2) im Fügespalt (17) auf die Oberfläche des zu aktivierenden/reaktivierenden Klebstoffs unter einem Einfallswinkel (γ) von 0°<γ<20° auftritt.

5. Verfahren nach einem der vorhergehenden Ansprüche,
**dadurch gekennzeichnet, dass**
der Laserstrahl (2) durch ein Linsensystem und/oder durch Strahloszillation auf die Größe der zu aktivierenden Klebstoffoberfläche aufgeweitet wird.

6. Verfahren nach einem der vorhergehenden Ansprüche,
**dadurch gekennzeichnet, dass**
eine Laserstrahlung (2) mit einer Wellenlänge zwischen 800 nm und 2500 nm oder zwischen 9 µm und 11 µm verwendet wird.

7. Verfahren nach einem der vorhergehenden Ansprüche,
**dadurch gekennzeichnet, dass**
ein Diodenlaser, Festkörperlaser, Faserlaser oder CO₂-Laser für die Bestrahlung verwendet wird.

8. Vorrichtung zur Beschichtung von Bauteilen (1) aus Holz, Holzwerkstoffen, Kunststoff o. dgl. mit einer soliden Beschichtung (3), bei der das Bauteil (1) und die solide Beschichtung (3) relativ zueinander bewegt werden und im Bereich der Andruckzone (30) mittels eines Andruckelements (4) miteinander verbunden werden, bestehend aus mindestens einer Laserquelle (34) und mindestens einem Ablenkspiegel und/oder einem Linsensystem zur Ablenkung und/oder Aufweitung des Laserstrahls (2), wobei der Laserstrahl (2) im Bereich der Wirkzone (32) auf die Oberfläche des Klebstoffes auftreffen kann, und **dadurch gekennzeichnet daß** optische
Vorrichtungen, das Andruckelement (4) und eine Zufuhrvorrichtung für die solide Beschichtung (3) auf einem in einer ersten (X) und einer zweiten (Y) Richtung beweglichen und um einen Winkel schwenkbaren Beschichtungsaggregat (18) angeordnet sind.

9. Vorrichtung nach Anspruch 8,
**dadurch gekennzeichnet, dass**
mittels einer Sensorik (10, 11) die tatsächlich vom Klebstoff aufgenommene Energie des Laserstrahls (2) erfasst wird und mittels einer Datenverarbeitungseinrichtung eine Rückkoppelung auf mindestens einen der Prozessparameter (Vorschubgeschwindigkeit, Laserleistung, Geometrie des Laserstrahls, Andruckkraft) erfolgt.

10. Vorrichtung nach Anspruch 8 oder 9,
**dadurch gekennzeichnet, dass**
der Laserstrahl (2) im Bereich der Wirkzone (32) unter einem Winkel von 0°<γ<90°, insbesondere unter einem Winkel von 0°<γ<20°, auf die Oberfläche des Klebstoffes auftrifft.

11. Vorrichtung nach Anspruch 9,
**dadurch gekennzeichnet,**
**dass** die Vorrichtung, bestehend aus mindestens einer Laserquelle (34), einer Datenverarbeitungseinrichtung und einer Sensorik (10, 11), als Nachrüsteinheit für bestehende Vorrichtungen zur Beschichtung von Bauteilen (1) mit einer soliden Beschichtung (3) ausgebildet ist.

## Claims

1. Method for coating components (1) made from wood, derived timber products, plastic or the like, in which a solid coating (3), in particular made from a genuine wood veneer, is applied to one surface of the component (1), wherein component (1) and solid coating (3) are moved relative to one another and joined to one another by means of adhesive in the area of a pressure zone (30), wherein the adhesive is activated or reactivated in the area of a reaction zone (32) by irradiation using at least one laser beam (2), and then the solid coating (3) is joined to the component (1) by a pressure element (4), **characterised in that** optical devices, the pressure element (4) and a feed device for the solid coating (3) are arranged on a coating unit (18) which can be moved in a first (X) and a second (Y) direction and can be pivoted about an angle.

2. Method according to claim 1, **characterised in that** the energy of the laser beam (2) actually taken up by the adhesive is recorded and feedback is effected on at least one of the process parameters (advance speed, laser power, geometry of the laser beam, pressing force).

3. Method according to claim 1 or 2, **characterised in that** the laser beam (2) in the joint gap (17) meets the surface of the adhesive to be activated/reactivated at an angle of incidence (γ) of 0°<γ<90°.

4. Method according to one of the preceding claims, **characterised in that** the laser beam (2) in the joint gap (17) meets the surface of the adhesive to be activated/reactivated at an angle of incidence (γ) of 0°<γ<20°.

5. Method according to one of the preceding claims, **characterised in that** the laser beam (2) is widened to the size of the adhesive surface to be activated by a lens system and/or by beam oscillation.

6. Method according to one of the preceding claims, **characterised in that** laser radiation (2) having a wavelength between 800 nm and 2,500 nm or between 9 µm and 11 µm is used.

7. Method according to one of the preceding claims, **characterised in that** a diode laser, solid-state laser, fibre laser or CO₂ laser is used for irradiation.

8. Device for coating components (1) made from wood, derived timber products, plastic or the like, having a solid coating (3), in which the component (1) and the solid coating (3) are moved relative to one another and are joined to one another in the area of the pressure zone (30) by means of a pressure element (4), consisting of at least one laser source (34) and at least one deflecting mirror and/or a lens system to deflect and/or widen the laser beam (2), wherein the laser beam (2) may meet the surface of the adhesive in the area of the reaction zone (32), and **characterised in that** optical devices, the pressure element (4) and a feed device for the solid coating (3) are arranged on a coating unit (18) which can be moved in a first (X) and a second (Y) direction and can be pivoted about an angle.

9. Device according to claim 8, **characterised in that** by means of a sensor system (10; 11), the energy of the laser beam (2) actually taken up by the adhesive is recorded and by means of a data-processing device, feedback is effected on at least one of the process parameters (advance speed, laser power, geometry of the laser beam, pressing force).

10. Device according to claim 8 or 9, **characterised in that** the laser beam (2) in the area of the reaction zone (32) meets the surface of the adhesive at an angle of 0°<γ<90°, in particular at an angle of 0°<γ<20°.

11. Device according to claim 9, **characterised in that** the device, consisting of at least one laser source (34), one data-processing device and a sensor system (10, 11), is designed as a retrofitting unit for existing devices for coating components (1) with a solid coating (3).

## Revendications

1. Procédé de revêtement de composants (1) en bois, matériaux ligneux, matière synthétique ou analogue, dans lequel un revêtement (3) solide, en particulier composé d'un placage en vrai bois, est appliqué sur une face du composant (1), le composant (1) et le revêtement (3) solide étant déplacés l'un par rapport à l'autre et reliés ensemble au moyen d'un adhésif dans la région d'une zone de pressage (30),
où
l'adhésif est activé ou réactivé dans la région d'une zone active (32), par irradiation avec au moins un rayon laser (2) et, ensuite, le revêtement (3) solide est relié au composant (1) au moyen d'un élément de pressage (4), **caractérisé en ce que** des dispositifs optiques, l'élément de pressage (4) et un dispositif d'alimentation pour le revêtement (3) solide sont disposés sur une unité de revêtement (18) mobile dans une première (X) et une deuxième (Y) direction et susceptible de pivoter de la valeur d'un angle.

2. Procédé selon la revendication 1,
**caractérisé en ce que**
l'énergie, effectivement captée par l'adhésif, du rayon laser (2) est appréhendée et une rétroaction est effectuée sur au moins l'un des paramètres de processus (vitesse d'avancement, puissance laser, géométrie du rayon laser, force de pressage).

3. Procédé selon la revendication 1 ou 2,
**caractérisé en ce que**
dans l'intervalle de joint (17), le rayon laser touche la surface de l'adhésif à activer/réactiver, sous un angle d'incidence (γ) dans la fourchette de 0°<γ<90°.

4. Procédé selon l'une des revendications précédentes,
**caractérisé en ce que**
dans l'intervalle de joint (17), le rayon laser touche la surface de l'adhésif à activer/réactiver, sous un angle d'incidence (γ) dans la fourchette de 0°<γ<20°.

5. Procédé selon l'une des revendications précédentes,
**caractérisé en ce que**
le rayon laser (2) est élargi par un système de lentilles et/ou par oscillation du rayon, pour atteindre la taille de la surface d'adhésif à activer.

6. Procédé selon l'une des revendications précédentes,
**caractérisé en ce qu'**
est utilisé un rayonnement laser (2) d'une longueur d'onde dans la fourchette comprise entre 800 nm et 2500 nm ou entre 9 µm et 11 µm.

7. Procédé selon l'une des revendications précédentes,
**caractérisé en ce qu'**
est utilisé pour l'irradiation un laser à diode, un laser solide, un laser à fibre ou un laser à CO₂.

8. Dispositif de revêtement de composants (1) en bois, matériaux ligneux, matière synthétique ou analogue, avec un revêtement (3) solide, pour lequel le composant (1) et le revêtement (3) solide sont déplacés l'un par rapport à l'autre et reliés ensemble dans la région de la zone de pressage (30), au moyen d'un élément de pressage (4), composé d'au moins une source laser (34) et d'au moins un miroir de renvoi et/ou un système à lentille pour dévier et/ou élargir le rayon laser (2), le rayon laser (2), dans la région de la zone active (32), pouvant toucher la surface de l'adhésif et **caractérisé en ce que** des dispositifs optiques, l'élément de pressage (4) et un dispositif d'alimentation pour le revêtement (3) solide sont disposés sur une unité de revêtement (18) mobile dans une première (X) et une deuxième (Y) direction et susceptible de pivoter de la valeur d'un angle.

9. Dispositif selon la revendication 8,
**caractérisé en ce que**,
au moyen d'une sensorique (10, 11), l'énergie, effectivement captée par l'adhésif, du rayon laser (2) est appréhendée et une rétroaction est effectuée sur au moins l'un des paramètres de processus (vitesse d'avancement, puissance laser, géométrie du rayon laser, force de pressage), au moyen d'un système de traitement des données.

10. Dispositif selon la revendication 8 ou 9,
**caractérisé en ce que**,
dans la région de la zone active (32), le rayon laser touche la surface de l'adhésif à activer/réactiver, sous un angle d'incidence dans la fourchette de 0°<γ<90°, en particuleir dans la fourchette de 0°<γ<20°.

11. Dispositif selon la revendication 9,
**caractérisé en ce que**
le dispositif, composé d'au moins une source laser (34), d'un dispositif de traitement de données et d'une sensorique (10, 11), est réalisé sous la forme d'unité de rééquipement pour des dispositifs existants de revêtement de composants (1) avec un revêtement (3) solide.
